# FASCICULE DE BREVET EUROPEEN

(11) **EP 3 793 852 B1**
(45) Date de publication et mention de la délivrance du brevet: **26.02.2025**
(21) Numéro de dépôt: 19715478.4
(22) Date de dépôt: 04.04.2019
(51) Int. Cl.: B60K 6/442, B60K 6/36, B60K 6/547, F16H 3/091

(54) **TRANSMISSION HYBRIDE A MACHINE ÉLECTRIQUE DEPORTÉE**
HYBRIDGETRIEBE MIT VERSETZTER ELEKTRISCHER MASCHINE
HYBRID TRANSMISSION WITH OFFSET ELECTRIC MACHINE

(30) Priorité: 15.05.2018 FR 1854056
(43) Date de publication de la demande: 24.03.2021
(73) Titulaire: Renault s.a.s, 92100 Boulogne Billancourt (FR)
(72) Inventeur: MERCAY, Patrice, 78180 Montigny le bretonneux (FR); VIGNON, Antoine, 78320 Levis Saint Nom (FR)
(74) Mandataire: Elzaburu S.L.P.
(86) Numéro de dépôt international: PCT/EP2019/058527
(87) Numéro de publication internationale: WO 2019/219294

(56) Documents cités:
- EP-A1- 2 913 214
- EP-A1- 3 309 031
- EP-A2- 1 116 618
- FR-A1- 3 022 495

## Description

La présente invention se rapporte au domaine des transmissions hybrides pour véhicules automobiles, comportant d'une part un moteur thermique d'entraînement, et d'autre part une machine électrique.

Plus précisément, la présente invention a pour objet une transmission hybride pour véhicule automobile muni d'un moteur thermique et d'une machine électrique de traction déportée sur la même ligne, comprenant deux arbres primaires concentriques liés respectivement au moteur thermique et à la machine électrique sans embrayage de coupure, un arbre secondaire relié aux roues du véhicule par un différentiel, et un arbre de transfert de mouvement d'un arbre primaire sur l'arbre secondaire, et de couplage des arbres primaires.

Par la publication FR 3 022 495, on connaît une transmission hybride à machine électrique déportée comportant deux arbres primaires concentriques, dont un arbre primaire plein relié à un moteur thermique *ICE* et un arbre primaire creux relié à une machine électrique *ME* déportée à l'extrémité opposée de la transmission. La transmission comporte un arbre secondaire portant un pignon d'attaque du différentiel. Elle comporte également un arbre de transfert, lié en permanence à l'arbre primaire plein. L'arbre de transfert renvoie le mouvement du primaire sur l'arbre secondaire sur certains rapports de transmission, mais n'attaque pas directement le différentiel.

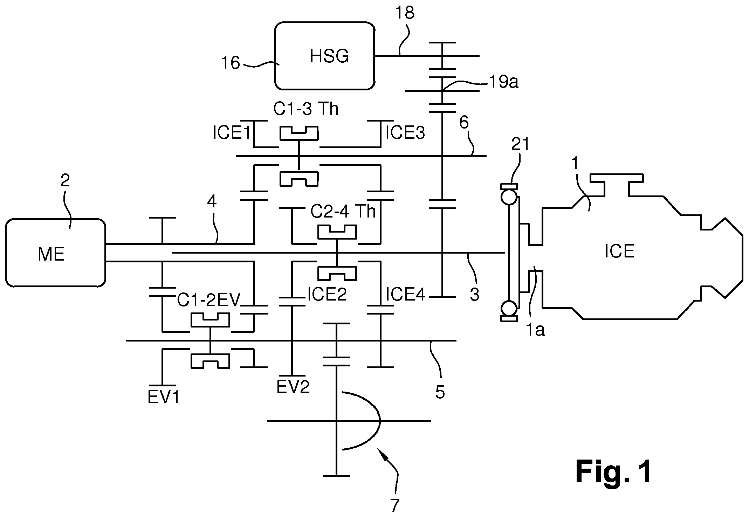

En référence à la figure 1, la « *structure de traction électrique »* de cette première transmission, est composée de deux rapports électriques *EV1* et *EV2,* assurés par l'engrènement de deux « *pignons fixes électriques »* de l'arbre primaire creux avec deux « *pignons fous électriques* » tournant sur l'arbre secondaire.

Sa « *structure de traction thermique* » est composée de quatre rapports thermiques *ICE1, ICE2, ICE3* et *ICE4,* associés à deux pignons fous de l'arbre primaire thermique, et de deux pignons fous, de l'arbre de transfert. Les rapports *ICE2* et *ICE4* descendent directement de la ligne primaire sur deux pignons fixes de l'arbre secondaire. Les rapports *ICE1* et *ICE3* empruntent l'arbre de transfert, pour redescendre sur le secondaire par les pignons des rapports *EV2* ou *ICE4.* Enfin, la transmission reçoit le couple d'une une deuxième machine électrique *HSG,* descendant sur l'arbre de transfert par un engrenage de liaison.

La transmission possède deux rapports électriques *EV1* et *EV2,* et quatre rapports thermiques *ICE1, ICE2, ICE3* et *ICE4.*

Ces rapports, et leurs combinaisons hybrides, permettent d'adapter les moteurs de traction, pour optimiser performance énergétique globale.

Toutefois, le changement entre les deux rapports électriques *EV1* et *EV2* en accélération implique une rupture de couple, qui est ressentie désagréablement par certains utilisateurs, habitués notamment au confort habituel des transmissions automatiques sans rupture de couple, telles que les boîtes de vitesses à double embrayage, ou les transmissions infiniment variables (CVT), ou encore aux véhicules électriques mono-rapport.

Une transmission hybride similaire est connue du document EP 3 309 031 A1.

La présente invention vise à tirer profit de l'augmentation des capacités de stockage électrique des batteries, et de l'amélioration des performances des machines électriques, pour pallier les inconvénients de la transmission connue. Elle permet à la transmission d'échapper au reproche d'inconfort évoqué ci-dessus, lié principalement à une mauvaise qualité de certains changements de rapport.

Dans ce but, la transmission proposée comprend les caractéristiques de 1a revendication 1. Ainsi, elle comporte seulement trois pignons fous primaires associés au moteur thermique, dont les deux premiers pignons tournent autour de l'arbre primaire lié au moteur thermique, et le troisième pignon tourne autour de l'arbre de transfert, et au moins un pignon primaire fixé sur l'arbre primaire, lié à la machine électrique de traction.

Dans un mode de réalisation, le troisième pignon fou engrène avec un pignon fixe de l'arbre primaire, lié à la machine de traction.

Grâce ces modifications, il devient possible de bénéficier de l'augmentation des capacités des machines électriques, pour améliorer, d'une part les performances en rendement et masse de la transmission, et d'autre part la qualité des changements de rapports. Grâce à l'invention, on parvient également à limiter le nombre de changements de rapport, en supprimant un rapport thermique court, et le deuxième rapport électrique.

La présente invention sera mieux comprise à la lecture de la description suivante d'un mode de réalisation non limitatif de celle-ci, en se reportant aux dessins annexés, sur lesquels :
- la figure 1 illustre une transmission connue antérieurement,
- la figure 2 illustre un premier mode de réalisation de l'invention,
- la figure 3 montre son agencement transversal,
- la figure 4 est une matrice de ses modes cinématiques hybrides parallèle, thermique, électrique,
- la figure 5 illustre son mode hybride série,
- la figure 6 montre sa structure de liaison électrique- thermique,
- la figure 7 montre sa structure de liaison électrique,
- la figure 8 montre sa structure de traction hybride,
- la figure 9 illustre l'utilisation de la transmission sur un véhicule hybride rechargeable,
- la figure 10 illustre son utilisation sur un véhicule hybride non rechargeable,
- la figure 11 illustre un mode de réalisation d'une transmission non couvert par l'invention revendiquée,
- la figure 12 se rapporte à sa structure de liaison électrique-thermique de celle-ci non couverte par l'invention revendiquée,
- la figure 13, à sa structure de liaison électrique,
- la figure 14, à sa structure de descente de pont, et
- la figure 15 et la figure 16, illustrent son utilisation sur un véhicule hybride rechargeable (PHEV)ou non (HEV) .

La transmission hybride de la figure 1 pour véhicule automobile muni d'un moteur thermique 1 et d'une machine électrique d'entraînement 2, comprend deux arbres primaires 3, 4 concentriques, reliés au vilebrequin du moteur thermique 1 (*ICE*) (non représenté) et à la machine électrique principale de traction 2 *ME,* sans embrayage de coupure. Elle comprend un arbre secondaire 5 relié aux roues du véhicule par un différentiel 7, et un arbre de transfert 6 de mouvement de l'arbre arbre primaire plein 3 sur l'arbre secondaire 5, et de couplage des arbres primaires 3, 4. L'arbre primaire plein 3 est connecté par l'intermédiaire d'un système de filtration 21 (moyeu amortisseur, « *damper* »*,* double volant amortisseur DVA ou autre), au nez du vilebrequin 1a du moteur thermique *ICE.* La transmission est également couplée à une deuxième machine électrique 16 *HSG,* reliée à l'arbre de transfert 6 par un pignon de renvoi 19a.

Cette transmission dispose de trois coupleurs :
- un premier coupleur *C2-4Th* permet d'engager sur la ligne primaire, le deuxième et le quatrième rapport thermique *ICE2, ICE4,*
- un deuxième coupleur *C1-2EV,* permet d'engager sur la ligne secondaire, deux pignons de rapports électriques *EV1, EV2,* et
- un troisième coupleur *C1-3Th* permet d'engager sur l'arbre de transfert, un premier et un troisième rapport thermique *ICE1, ICE3.*

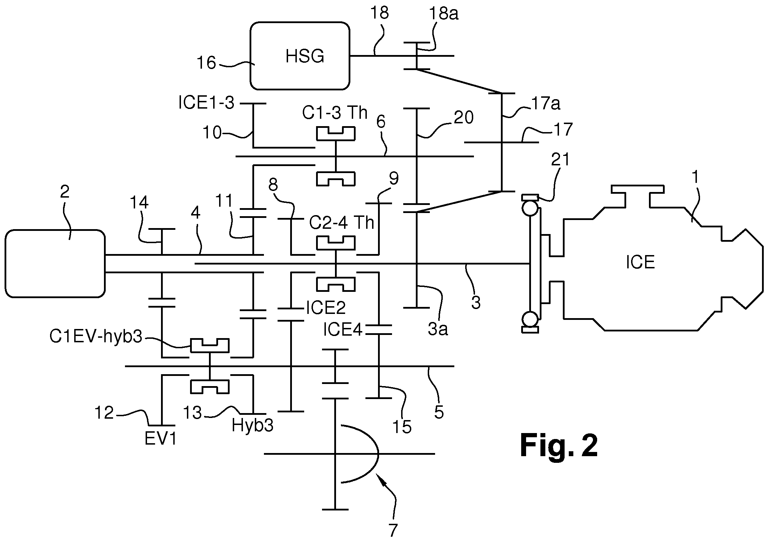

Sur la figure 2, on retrouve en partie le même agencement. Il s'agit également d'une transmission hybride pour véhicule automobile muni d'un moteur thermique 1 et d'une machine électrique de traction 2 déportée sur la même ligne, comprenant deux arbres primaires 3, 4 concentriques liés respectivement au moteur thermique et à la machine électrique 2 sans embrayage de coupure, un arbre secondaire 5 relié aux roues du véhicule par un différentiel 7, et un arbre de transfert 6 de mouvement d'un arbre primaire 3 sur l'arbre secondaire 5 et de couplage des arbres primaires 3, 4.

Toutefois, la chaîne cinématique a considérablement évolué. La nouvelle transmission comporte seulement trois pignons fous primaires 8, 9, 10, associés au moteur thermique 1. Les deux premiers 8, 9 tournent autour de l'arbre primaire 3 lié au moteur thermique 1 *ICE.* Ils permettent d'établir chacun un rapport thermique *ICE2, ICE4,* « *hybridable* » par combinaison avec un rapport électrique *EV1.* Le troisième pignon fou 10, tourne autour de l'arbre de transfert 6. Deux pignons primaires 11, 14 sont fixés sur l'arbre creux 4 lié à la machine *ME.* Seul le pignon primaire fixe 14, engrenant avec un pignon fou secondaire 12, est dédié à un mode purement électrique, sur le rapport *EV1.* Le deuxième pignon fou 13 de l'arbre secondaire 5, faisant face au premier, n'est dédié qu'à un mode hybride *Hyb3.*

Dans les deux modes de réalisation non limitatifs de l'invention décrits, la transmission peut être reliée à une machine électrique secondaire 16 *HSG,* dont l'arbre de sortie 18 descend sur l'arbre de transfert 6, de manière à pouvoir cumuler son couple avec celui du moteur thermique. La deuxième machine électrique 16, permet de disposer d'un mode hybride série, dans lequel le moteur thermique 1 entraîne la machine secondaire 16 en générateur, afin de produire de l'énergie électrique utilisable par la machine électrique de traction *ME,* pour déplacer le véhicule.

Sur la figure 2, le troisième pignon fou 10, dédié aux rapports thermiques, engrène avec un pignon fixe 11 de l'arbre primaire 4 lié à la machine de traction 8. Il permet d'établir des modes hybrides sur deux rapports thermiques différents *ICE1* et *IC3,* et en particulier le mode « *Hyb3* », qui bénéficie de la démultiplication du rapport thermique *ICE3.* L'arbre de transfert 6 porte un pignon fixe 20 engrenant avec le pignon fixe primaire 3a.

Les deux pignons fous 12, 13, de l'arbre secondaire 5, engrènent avec deux pignons fixes 11, 14 de l'arbre primaire creux 4, pour établir le rapport électrique *EV1* et le rapport thermique *ICE1,* ou le mode hybride *Hyb3.* Lorsque le troisième pignon fou 10, est craboté, le couple thermique descend sur l'arbre primaire creux 4. Si le pignon 12 est craboté en même temps que le pignon 10, la démultiplication du couple thermique correspond à celle d'un premier rapport thermique *ICE1.* Ce rapport est hybridable par combinaison avec le rapport électrique *EV1.* Si au contraire le pignon 13 est craboté sur son arbre, le mode Hyb3 est engagé, avec un rapport de démultiplication thermique de troisième *ICE3.*

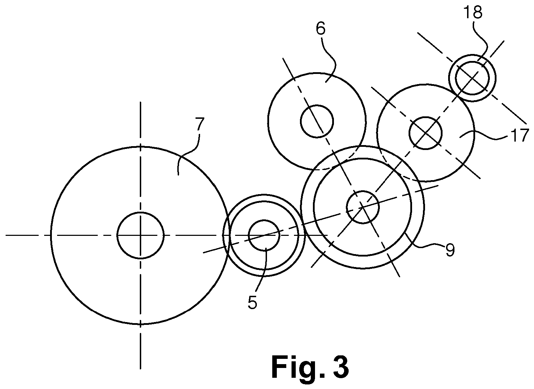

La vue en coupe transversale de la figure 3 montre la disposition spatiale des lignes d'arbres et de pignons de la figure 2. De la gauche vers la droite, on voit la ligne du différentiel 7, la ligne du secondaire 5, puis la ligne primaire dont le plus grand diamètre est delui du pignon fou thermique 9, du rapport thermique *ICE4* ; au dessus de celle-ci, à gauche la ligne de transfert 6 et à droite la ligne de pignon intermédiaire 9 vers la ligne 18 de machine électrique 16 *HSG.*

La nouvelle transmission hybride proposée dispose de huit modes de traction :
- un mode de traction électrique sur le rapport électrique *EV1,*
- deux modes de traction thermique sur les rapports *ICE2* et *ICE4,* et
- cinq modes hybrides : un premier mode parallèle *« Hyb11* » cumulant le couple du moteur thermique sur le rapport ICE1, et celui du rapport électrique *EV1* ; un deuxième mode parallèle « *Hyb3* » regroupant sur le pignon *Hyb3,* le couple de la machine *ME* et celui du pignon thermique *ICE1-3* ; un troisième mode parallèle « *Hyb21* » cumulant le couple du deuxième rapport thermique et celui du rapport électrique ; un quatrième mode parallèle « *Hyb41* » cumulant le couple du quatrième rapport thermique et du rapport électrique ; enfin un mode hybride série *« e-drive1 »* dans lequel le moteur thermique assure l'alimentation énergétique de la machine de traction *ME,* en faisant tourner la deuxième machine *HSG* en générateur. Dans les quatre modes hybrides parallèle, la puissance de la machine secondaire *HSG* 16 peut être cumulée à celle du moteur thermique.

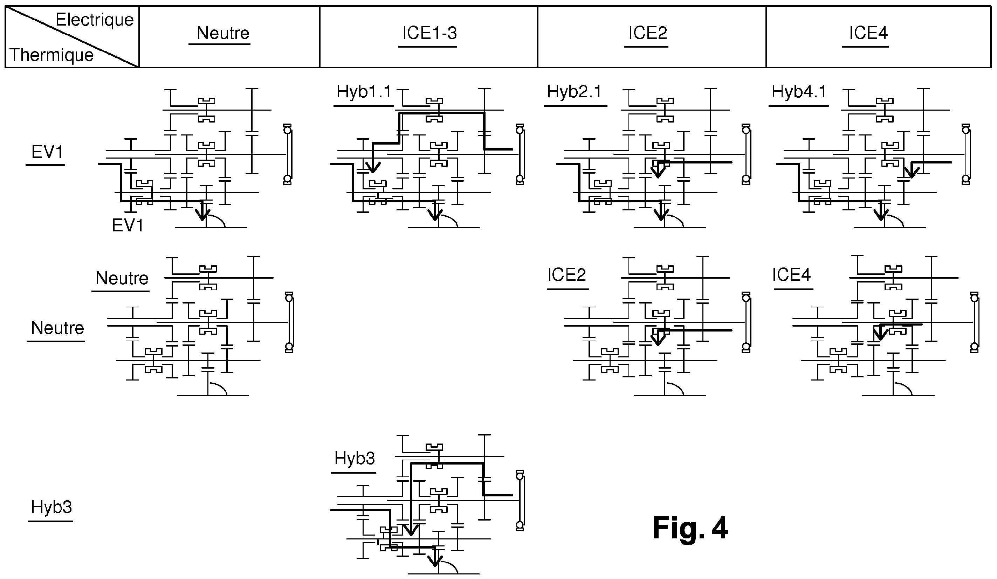

Les flux de couple établis sur chacun de ces modes sont détaillés sur la figure 4 :
- en haut à gauche, le rapport *EV1* est engagé : coupleur *C1-2EV* à gauche, coupleurs *C2-4Th* et *C1-3Th* au neutre,
- sur la première ligne, trois rapports hybrides : mode *EV1 + ICE1-3* avec coupleur *C1-2EV* à gauche et coupleur *C1-3Th3* engagé ; mode *EV1 + ICE2* avec coupleur *C2-4Th* à gauche ; mode *EV1 + ICE4* avec coupleur *C2-4Th* à droite,
- sur la deuxième ligne le coupleur *C1-2EV* est au neutre : deux rapports en mode thermique, *IC2* et *ICE4,* selon la position de *C2-4Th,*
- sur la troisième ligne, mode hybride *Hyb3* : coupleur *C2-4Th* au neutre, coupleur *C1-2EV* à droite et coupleur *C1-3Th* engagé.

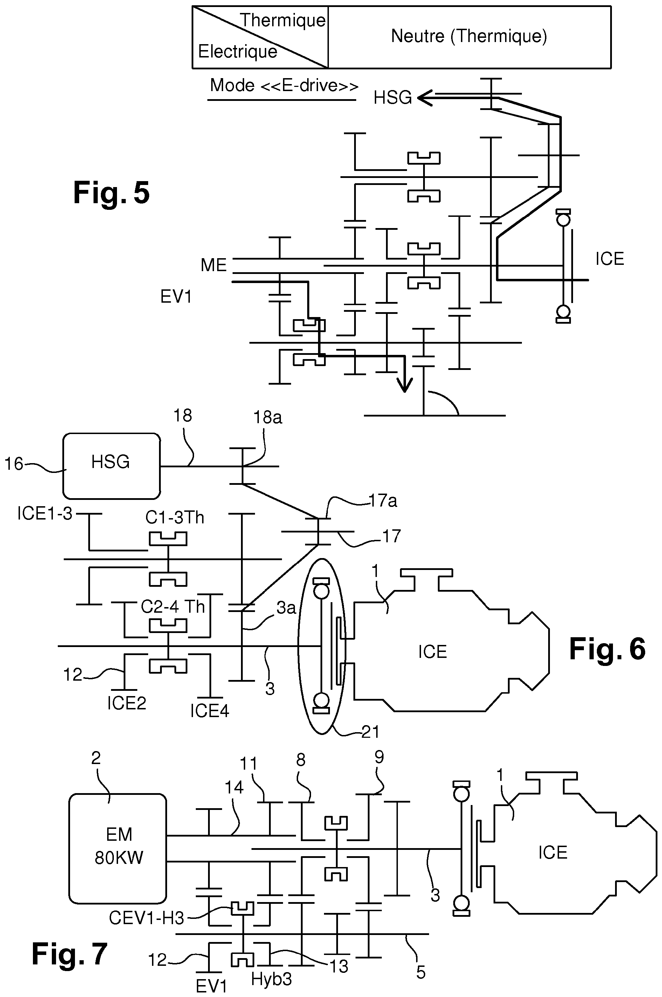

La figure 5 illustre un mode hybride série, où le moteur thermique fait tourner la machine *HSG* en générateur, tandis que la machine *ME* assure seule, la traction du véhicule.

La « *structure de liaison électrique-thermique* » (*HSG-ICE*) de la transmission est mise en évidence sur la figure 6. Elle est composée des trois lignes d'arbres reliant cinématiquement la machine électrique secondaire *HSG* au moteur thermique *ICE* :
- l'arbre d'entrée 18 de la machine HSG,
- l'arbre de liaison 17, et
- l'arbre primaire plein 3 sur lequel est rapporté le pignon fixe 3a.

L'arbre primaire plein 3 supporte également le *DVA* 21*,* ainsi que le système de couplage *C2-4Th* des pignons fous *I8* et **9.** La structure de liaison *HSG-ICE* est également en prise avec l'arbre de transfert 6 par le pignon primaire 3a, engrenant avec le pignon 17a de l'arbre de liaison 17, couplé au pignon 18a, pour assurer les fonctions de synchronisation, assistance au décrabotage, et « *boost* » avec le pignon fou *ICE1-3* grâce au système de couplage *C1-3Th.*

Cette structure assure les fonctions suivantes :
- lancement du moteur thermique *ICE* par le moteur électrique HSG par un engrenage triple (« *triplette* ») 18a, 17a, 3a (au lieu d'un engrenage quadruple dans l'architecture précédente),
- synchronisation des régimes de rotation du moteur thermique *ICE* à l'aide du *HSG* sur les vitesses de rotation des pignons fou à engager sur chaque rapport,
- assistance au décrabotage des pignons grâce à l'annulation du couple inertiel par la machine secondaire *HSG,*
- apport d'un couple supplémentaire sur le rapport engagé par la machine secondaire *HSG,* assurant une fonction « *boost* » d'agrément de conduite, par l'apport immédiat d'une accélération du véhicule lors d'un enfoncement rapide de la pédale d'accélérateur,
- recharge de la batterie par utilisation du couple du moteur thermique disponible non utile à la traction du véhicule, pour faire tourner la machine *HSG* en générateur ; la puissance transite dans ce cas par les arbres 3, 17, 18, au travers d'un engrenage triple (qui améliore le rendement de la transmission par rapport à l'engrenage quadruple de la transmission précédente), et
- limitation des niveaux de couples d'impact lors de blocages soudains de la chaîne cinématique grâce à l'écrêtage du couple, par le *DVA* 21*.*

La « *structure de traction électrique* » de la transmission est mise en évidence sur la figure 7. L'arbre primaire creux 4 lié à la machine *ME,* et concentrique à l'arbre plein 3, porte deux pignons fixes :
- le pignon fixe 14 du rapport électrique *EV1,* en prise avec le premier pignon fou 12 de l'arbre secondaire 5, et
- le pignon fixe 11 de l'engrenage triple 10, 11, 13 permettant l'engagement de deux modes hybrides *Hyb11* et *Hyb3.*

Les deux pignons fous 12 et 13, sont « *crabotables* » sur leur arbre 5, à l'aide du système de couplage *C1EV-H3.* Une démultiplication totale d'environ 10 sur le rapport *EV1* permet d'assurer de bonnes performances pour le « *décollage* » à partir de l'arrêt, avec une accélération de 1m/s² sur une pente à 12%, et une vitesse maximum de déplacement Vmax ≥ 130km/h à 12000 tours minute (rpm) de la machine *ME.* La structure de traction électrique assure les fonctions suivantes :
- le décollage du véhicule à l'arrêt, dans toutes les situations raisonnablement prévisibles de pente, adhérence et de charge du véhicule,
- la traction du véhicule jusqu'à environ 130km/h en électrique pur ou en hybride (avec l'apport du couple du moteur thermique) suivant l'énergie disponible dans la batterie et l'enfoncement de la pédale d'accélérateur.

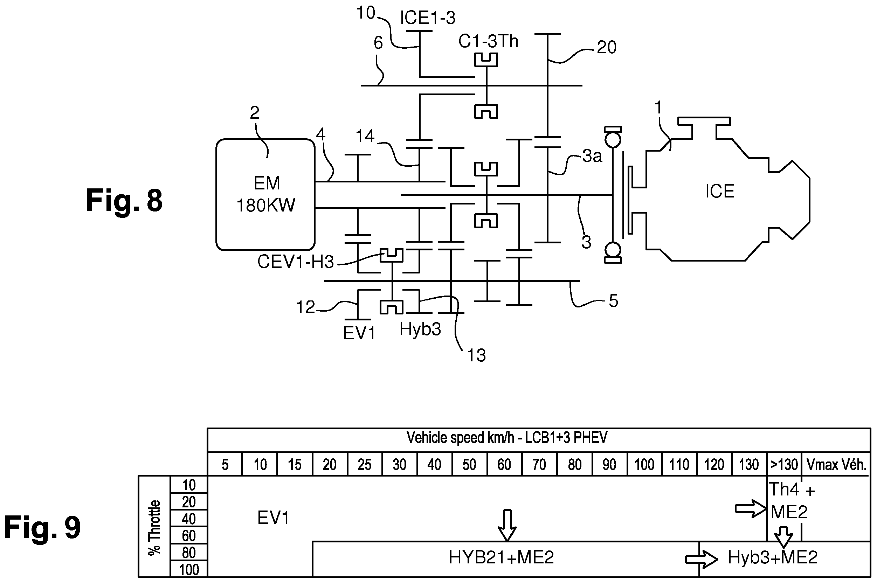

En référence à la figure 8, la « *structure de traction hybride* » de la transmission est la suivante :
- le premier mode hybride *Hyb1-1* est obtenu en crabotant le pignon *ICE1-3* avec le baladeur *C1-3Th,* et en crabotant le pignon *EV1* par le baladeur *CEV1-H3,* et
- le mode hybride *Hyb3* est réalisé en crabotant le pignon 10 avec le baladeur *C1-3Th,* et en cabotant le pignon 13 avec le baladeur *CEV1-H3.*

Sur le mode hybride *Hyb3,* le couple du moteur thermique descend de l'arbre de transfert 6 sur l'arbre secondaire 5 sur le deuxième rapport thermique *ICE3,* par un engrenage triple constitué du troisième pignon fou 10, d'un pignon fixe 11 de l'arbre primaire 4 lié à la machine électrique de traction 2, et d'un pignon fou 13 de l'arbre secondaire 5. La réalisation du troisième rapport thermique à la place du deuxième rapport électrique de la transmission connue, permet de libérer les démultiplications réalisables en troisième et en quatrième rapport thermique *ICE3* et *ICE4,* pour les adapter avec plus de souplesse aux contraintes de prestations dynamiques et de consommation de chaque véhicule. La « *structure hybride* » de la transmission assure les fonctions suivantes :
- la traction du véhicule en forte pente, sur le mode *Hyb11,* et
- la vitesse de déplacement maximum du véhicule sur le mode *Hyb3,* en additionnant les couples électrique et thermique pour assurer la plus forte accélération du véhicule et atteindre sa puissance maximum Pmax.

La combinaison de ces structures au sein de la transmission permet d'assurer des changements de rapport sans rupture de couple, par exemple dans les deux enchaînements de changement de rapports suivants :
- *Hyb21-> Hyb3* : *Hyb21->ICE2->Hyb22 -> ZEV2 -> **Hyb3,*** ou
- *ICE4 -> Hyb3* : ***ICE4** -> Hyb42 ->ZEV2 -> **Hyb3.***

La figure 9 propose de manière non limitative, des domaines d'utilisation privilégiés, pour les différents modes de la transmission, en fonction de l'enfoncement du papillon d'accélérateur et de la vitesse de déplacement. Ceci avec les zones de changements de rapport sur un véhicule rechargeable *PHEV,* en fonction de la vitesse du véhicule et de l'enfoncement de la pédale d'accélérateur : *EV1* (rapport électrique), *Hyb21* (Hybride *ICE2 + EV1* sur le deuxième rapport thermique), et *Hyb41* sur le quatrième, avec ou sans l'appoint de la deuxième machine électrique *HSG. Le rapport Hyb3* peut aussi bénéficier de l'appoint de la deuxième machine électrique *HSG.*

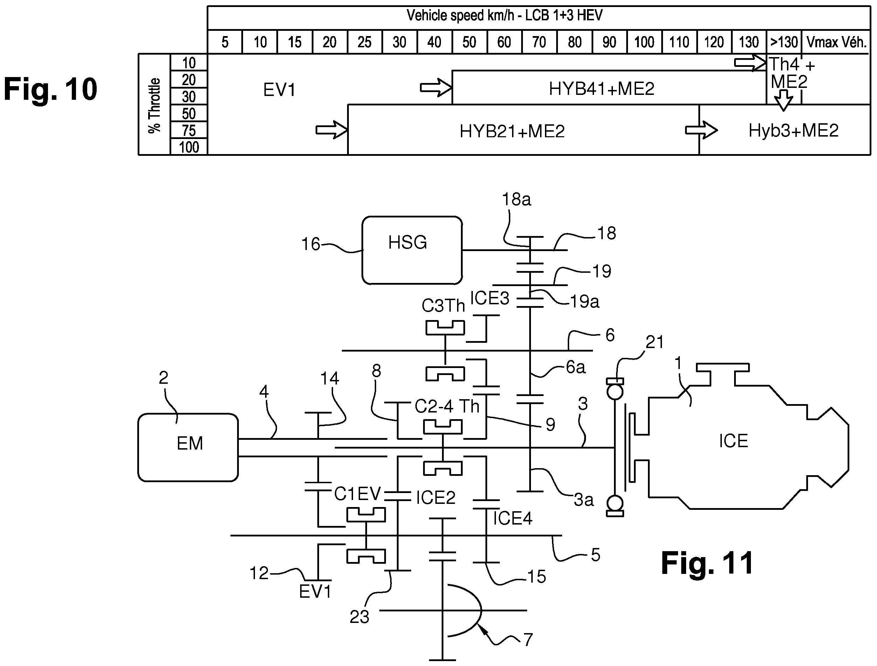

La figure 10 donne des indications analogues, dans le cas d'un véhicule hybride non rechargeable *HEV.*

Les figures 11 à 16 illustrent un mode de réalisation d'une transmission non couvert par l'invention revendiquée, dépourvue de son « *premier rapport thermique » ICE1.* Les structures de « *liaison électrique-thermique,* de « *liaison électrique* », et la structure de pont, ne sont pas identiques au premier mode de réalisation.

L'arbre creux 4, relié à la machine électrique de traction 2, porte un seul pignon fixe 14, engrenant avec un pignon fou 12 de l'arbre secondaire. Le troisième pignon fou 10 engrène avec le pignon 9 du rapport *ICE4,* engrenant lui-même avec le pignon fixe 15 de l'arbre secondaire 5 pour établir un rapport thermique.

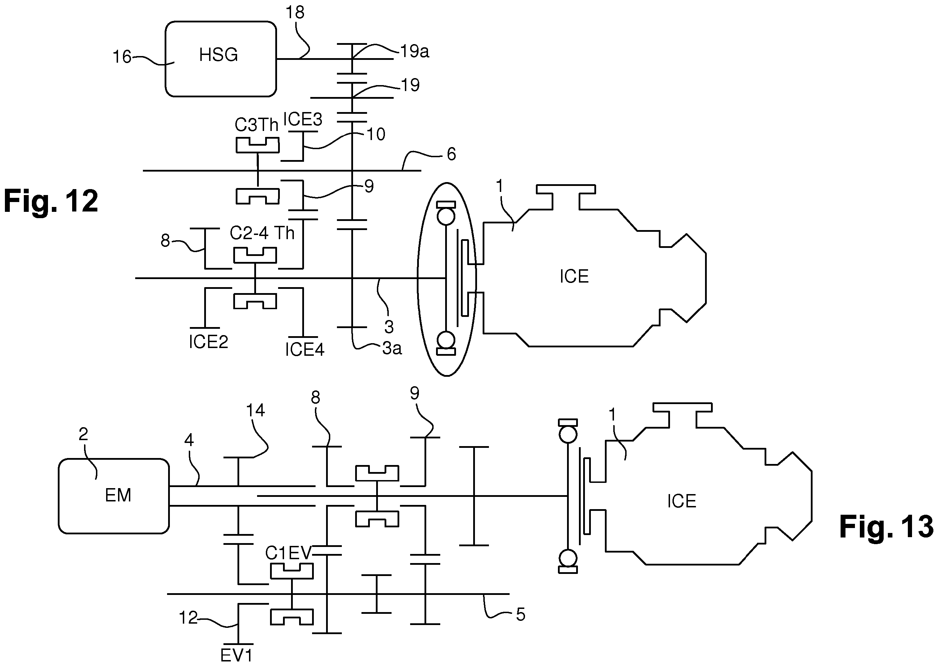

La démultiplication est adaptée pour profiter du couple maximum de la machine électrique au régime de rotation permettant l'allumage du moteur thermique. Comme indiqué sur la figure 12, la « *structure liaison électrique-thermique* », est composée de quatre lignes d'arbres reliant cinématiquement la machine *HSG* au moteur thermique *ICE :*
- l'arbre d'entrée 18 du HSG 16,
- l'arbre de liaison 19,
- l'arbre de transfert 6 couplage avec son pignon fixe 20, et le système de couplage du pignon fou 10 (rapport thermique *ICE3*)*,* et
- l'arbre primaire plein 3, supportant le système d'amortissement (*DVA*) 21, ainsi que le système de couplage des pignons fous 8 et 9 (rapports thermiques *ICE2* et *ICE4*)*.*

Cette structure exerce les fonctions suivantes :
- le lancement du moteur thermique ICE par la machine électrique HSG,
- la synchronisation du régime de rotation du moteur thermique *ICE* à l'aide du *HSG* sur la vitesse de rotation des pignons fous à engager,
- l'assistance au décrabotage des pignons à désengager, grâce l'annulation du couple inertiel par le *HSG,*
- l'apport par le *HSG,* d'un couple supplémentaire sur le rapport engagé, et la recharge de la batterie par utilisation du couple du moteur thermique disponible non utile à la traction du véhicule, lorsque le *HSG* fonctionne en générateur,
- la filtration des a-cyclismes du moteur thermique *ICE* par le *DVA* 21, et
- la limitation des couples d'impact, en cas de blocage brutal de la chaîne cinématique.

En référence à la figue 13, la « *structure de liaison électrique* » de la transmission est la suivante. Le rapport électrique *EV1* est obtenu par le pignon fixe 14 de l'arbre creux 4 et le pignon fou 12 de l'arbre secondaire 5 ; il est « *crabotable* » à l'aide du système de couplage *C1EV.* Une démultiplication totale d'environ 10 sur ce rapport permet d'assurer de bonnes performances en décollage du véhicule avec une accélération de 1m/s² en charge sur une pente de 12%, et une vitesse maximum supérieure à 130km/h à 12000 tours par minute (rpm).

La structure de liaison assure les fonctions suivantes :
- le décollage du véhicule dans toutes les situations raisonnablement prévisibles de pente, d'adhérence, et de charge du véhicule,
- la traction du véhicule jusqu'à environ 130km/h en mode électrique pur, ou en mode hybride (avec l'apport du couple du moteur thermique), selon l'énergie disponible dans la batterie et l'enfoncement de la pédale d'accélérateur.

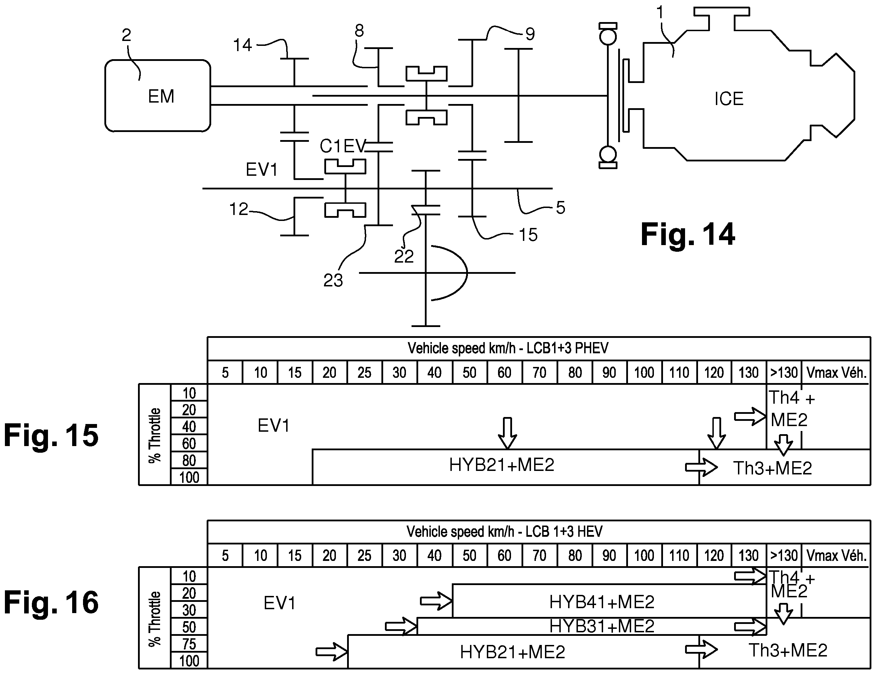

La « structure *de descente de pont* » correspondante, isolée sur la figure 14 est la suivante :
- transmission du couple thermique aux arbres de transmission en provenance des pignons fous thermiques 8, 9, 10,
- transmission du couple en provenance de la machine électrique de traction sur le pignon fou 12 du rapport *EV1,*
- transmission du couple thermique et électrique aux roues par l'arbre secondaire 5 et son pignon d'attaque 22, l'arbre secondaire 5 supportant les pignons fixes 23, 15 des rapports *ICE4* et *ICE2,* ainsi que le système de couplage *C1EV* du rapport *EV1* ; l'arbre secondaire 5 assure également le guidage du pignon fou 12 du rapport EV1.

Les figures 15 et 16 proposent des matrices d'utilisation (non limitatives) simplifiées, des rapports en fonction de l'enfoncement de la pédale d'accélérateur et de la vitesse du véhicule, pour un véhicule hybride rechargeable *PHEV* pour la figure 15 ou *HEV,* sur la figure 16.

Dans les deux modes de réalisation non limitatifs de l'invention décrits, la transmission possède trois pignons fous associés au moteur thermique et un rapport principal démultipliant la puissance de la machine électrique. Dans le premier mode de réalisation, le second rapport électrique de la transmission n'étant utilisé qu'en mode hybride.

Le pignon fou thermique 10, disposé sur l'arbre de transfert 6 relie les lignes primaires thermique et électrique. Il permet une hybridation parallèle directement en sortie des deux sources de traction (moteur thermique *ICE* et machine électrique *ME*)*.* Sa combinaison avec les démultiplications de l'arbre primaire électrique (arbre creux 4) crée des démultiplications correspondant à un rapport de première et de troisième dans un groupe motopropulseur thermique.

La réalisation dissociée des rapports de troisième *ICE3* et de quatrième *ICE4* permet une adaptation parfaite de l'ouverture de boîte en ajustant le quatrième rapport pour une consommation optimale sur autoroute, tandis que le troisième rapport peut être dédié à la performance dynamique du véhicule (accélération maximum et vitesse de déplacement maximum).

Dans le mode de réalisation non couvert par l'invention revendiquée et décrit au sein des figures 11 à 16, la transmission est dépourvue de deuxième rapport électrique, et de pignon fou reliant les lignes primaires électrique et thermique. Le troisième rapport thermique est réalisé par un engrenage triplette passant sur le pignon fou du quatrième rapport. Cette disposition réduit l'encombrement axial de la transmission et sa masse, tout en permettant un gain de rendement. Ce mode de réalisation trouve tout son intérêt, dès lors que la puissance du moteur thermique transformée en énergie électrique pour une traction en électrique en *EV1* est suffisante pour se passer du mode hybride *Hyb11.*

Dans les deux modes de réalisation décrits, le mode hybride série « *E-drive* » permet d'optimiser le rendement mécanique de la transmission, par l'utilisation du surplus de couple thermique pour recharger la batterie.

Dans le premier (figures 2 à 8), la puissance transite dans les deux sens entre le moteur thermique *ICE* et la machine électrique secondaire *HSG* 16 par un engrenage triple 18a, 17a, 3a, entre l'arbre primaire plein 3, un arbre intermédiaire 17 (décalé radialement de l'arbre de transfert 6) et l'arbre 18 de la machine secondaire 16. Cette disposition simplifie la chaîne cinématique entre le moteur thermique et la machine électrique secondaire *HSG,* car la démultiplication entre les deux moteurs est le résultat de deux engrènements au lieu de trois, sans passer par l'arbre de transfert.

Dans le deuxième (figures 11 à 14), ce transit s'effectue de manière analogue à la figure 1, au travers d'un engrenage quadruple. A cet égard l'architecture du premier mode de réalisation de la transmission est plus performante que celle du deuxième.

Enfin, les évolutions de la chaîne cinématique ne dégradent pas les performances dynamiques du véhicule, quant au « *décollage* »*,* à la traction en pente et à la vitesse maximum en mode électrique. Ces modifications consistent principalement à supprimer le deuxième rapport électrique *EV2* et le premier rapport thermique *ICE1.* Elles permettent d'optimiser :
- le rendement de la transmission par des gains aux niveaux des frottements de denture et des frottements des pignons fous sur leurs arbres,
- la masse engagée, donc le coût de l'organe et également l'autonomie du véhicule,
- la qualité globale des changements de rapport, grâce à la suppression du changement de rapport *EV1-EV2* et de *son « trou de couple »,* suppression très appréciable en roulage urbain et semi-urbain sur le nouveau mode électrique « *sans changement de rapport ».*

## Revendications

1. Transmission hybride pour véhicule automobile muni d'un moteur thermique (1) et d'une machine électrique de traction (2) déportée sur la même ligne, comprenant deux arbres primaires (3, 4) concentriques liés respectivement au moteur thermique et à la machine électrique (2) sans embrayage de coupure, un arbre secondaire (5) relié aux roues du véhicule par un différentiel (7), et un arbre de transfert de mouvement (6) d'un arbre primaire (3) sur l'arbre secondaire (5) et de couplage des arbres primaires (3, 4), la transmission hybride comportant seulement trois pignons fous associés au moteur thermique (8, 9, 10), dont les deux premiers (8, 9) tournent autour de l'arbre primaire (3) lié au moteur thermique et dont le troisième (10) tourne autour de l'arbre de transfert (6), et au moins un pignon primaire (14) fixé sur l'arbre primaire (4) lié à la machine électrique de traction (2), la transmission comprenant une machine électrique secondaire (16), dont l'arbre de sortie (18) descend sur l'arbre de transfert (6), de manière à pouvoir cumuler son couple avec celui du moteur thermique et la puissance transitant du moteur thermique (1) à la machine électrique secondaire (16) dans les deux sens, par un engrenage triple (18a, 17a, 3a) entre l'arbre primaire (3) relié au moteur thermique, un arbre intermédiaire (17) décalé radialement de l'arbre de transfert (6) et de l'arbre (18) de la machine secondaire (16), l'engrenage triple (18a, 171, 3a) comportant un pignon fixe primaire (3a) rapporté sur l'arbre primaire (3) relié au moteur thermique (1), le pignon fixe primaire (3a) engrenant avec un pignon (17a) de l'arbre intermédiaire (17), couplé à un pignon (18a) de l'arbre (18) de la machine secondaire (16).

2. Transmission hybride selon la revendication 1, **caractérisée en ce que** le troisième pignon fou associé au moteur thermique (10) engrène avec un pignon fixe (11) de l'arbre primaire (4) lié à la machine de traction (8)

3. Transmission hybride selon l'une des revendications précédentes , **caractérisée en ce que** les deux premiers pignons fous (8, 9) associés au moteur thermique permettent d'établir chacun un rapport thermique (*ICE2*)*,* (*ICE4*)*,* hybridable par combinaison avec un rapport électrique (EV1).

4. Transmission hybride selon la revendication 2 et 3, **caractérisée en ce que** le troisième pignon fou associé au moteur thermique (10), permet d'établir des modes hybrides sur deux rapports thermiques différents *(ICE1)* et *(ICE3).*

5. Transmission hybride selon la revendication 4, **caractérisée en ce que** l'arbre secondaire (5) porte deux pignons fous (12, 13) engrenant avec deux pignons fixes (14, 11) de l'arbre primaire (4) lié à la machine de traction, ces deux pignons fous permettant d'établir pour l'un le rapport électrique (*EV1*)*,* et pour l'autre le premier rapport thermique *(ICE1),* ou le mode hybride *(Hyb3).*

6. Transmission hybride selon la revendication 5, **caractérisée en ce que** sur le mode hybride *(Hyb3)* le couple du moteur thermique (1) descend de l'arbre de transfert (6) sur l'arbre secondaire (5) sur le deuxième rapport thermique *(ICE3),* par un engrenage triple constitué du troisième pignon fou associé au moteur thermique (10), d'un pignon fixe (11) de l'arbre primaire (4) lié à la machine électrique de traction (2), et d'un pignon fou (13) de l'arbre secondaire (5).

7. Transmission hybride selon l'une des revendications précédentes, **caractérisée en ce qu'**elle dispose d'un mode hybride série, dans lequel, le moteur thermique (1) entraîne la machine électrique secondaire (16) en générateur, pour produire de l'énergie électrique utilisable par la machine électrique de traction (2) pour déplacer le véhicule.

## Patentansprüche

1. Hybridgetriebe für ein Kraftfahrzeug, das mit einem Verbrennungsmotor (1) und mit einer elektrischen Zugmaschine (2) versehen ist, die auf derselben Linie versetzt ist, umfassend zwei konzentrische Primärwellen (3, 4), die jeweils mit dem Verbrennungsmotor und der elektrischen Maschine (2) ohne Trennkupplung verknüpft sind, eine Sekundärwelle (5), die über ein Differenzial (7) mit den Rädern des Fahrzeugs verbunden ist, und eine Welle (6) zum Übertragen der Bewegung einer Primärwelle (3) auf die Sekundärwelle (5) und zum Kuppeln der Primärwellen (3, 4), wobei das Hybridgetriebe nur drei Losräder, die dem Verbrennungsmotor (8, 9, 10) zugeordnet sind, von denen sich die zwei ersten (8, 9) um die Primärwelle (3) herum drehen, die mit dem Verbrennungsmotor verknüpft ist, und von denen sich das dritte (10) um die Übertragungswelle (6) herum dreht, und mindestens ein primäres Zahnrad (14) aufweist, das an der Primärwelle (4) befestigt ist, die mit der elektrischen Zugmaschine (2) verknüpft ist, das Getriebe umfassend eine sekundäre elektrische Maschine (16), deren Abtriebswelle (18) auf die Übertragungswelle (6) sinkt, sodass ihr Drehmoment mit dem des Verbrennungsmotors und der Leistung kumuliert werden kann, die von dem Verbrennungsmotor (1) in beide Richtungen auf die sekundäre elektrische Maschine (16) übergeht, durch einen dreifachen Eingriff (18a, 17a, 3a) zwischen der Primärwelle (3), die mit dem Verbrennungsmotor verbunden ist, einer Zwischenwelle (17), die radial von der Übertragungswelle (6) und der Welle (18) der sekundären Maschine (16) verschoben ist, wobei der dreifache Eingriff (18a, 171, 3a) ein primäres Festrad (3a) aufweist, das an der Primärwelle (3) angebracht ist, die mit dem Verbrennungsmotor (1) verbunden ist, wobei das primäre Festrad (3a) mit einem Zahnrad (17a) der Zwischenwelle (17) in Eingriff steht, das mit einem Zahnrad (18a) der Welle (18) der sekundären Maschine (16) gekoppelt ist.

2. Hybridgetriebe nach Anspruch 1, **dadurch gekennzeichnet, dass** das dritte Losrad, das dem Verbrennungsmotor (10) zugeordnet ist, mit einem Festrad (11) der Primärwelle (4) in Eingriff steht, die mit der Zugmaschine (8) verknüpft ist.

3. Hybridgetriebe nach einem der vorstehenden Ansprüche,
**dadurch gekennzeichnet, dass** die ersten zwei Losräder (8, 9), die dem Verbrennungsmotor zugeordnet sind, es jeweils ermöglichen, einen thermischen Gang (*ICE2*)*,* (*ICE4*) einzulegen, der durch Kombination mit einem elektrischen Gang (EV1) hybridisierbar ist.

4. Hybridgetriebe nach Anspruch 2 und 3, **dadurch gekennzeichnet, dass** das dritte Losrad, das dem Verbrennungsmotor (10) zugeordnet ist, es ermöglicht, Hybridmodi auf zwei unterschiedlichen thermischen Gängen *(ICE1)* und *(ICE3)* einzulegen.

5. Hybridgetriebe nach Anspruch 4, **dadurch gekennzeichnet, dass** die Sekundärwelle (5) zwei Losräder (12, 13) trägt, die mit zwei Festrädern (14, 11) der Primärwelle (4) in Eingriff stehen, die mit der Zugmaschine verknüpft ist, wobei diese zwei Losräder es ermöglichen, dass für das eine der elektrische Gang (*EV1*) und für das andere der erste thermische Gang *(ICE1)* oder der Hybridmodus *(Hyb3)* eingelegt wird.

6. Hybridgetriebe nach Anspruch 5, **dadurch gekennzeichnet, dass** in dem Hybridmodus *(Hyb3)* das Drehmoment des Verbrennungsmotors (1) von der Übertragungswelle (6) auf die Sekundärwelle (5) auf den zweiten thermischen Gang *(ICE3)* sinkt, durch einen dreifachen Eingriff, der aus dem dritten Losrad, das dem Verbrennungsmotor (10) zugeordnet ist, einem Festrad (11) der Primärwelle (4), die mit der elektrischen Zugmaschine (2) verknüpft ist, und einem Losrad (13) der Sekundärwelle (5) besteht.

7. Hybridgetriebe nach einem der vorstehenden Ansprüche,
**dadurch gekennzeichnet, dass** es über einen seriellen Hybridmodus verfügt, in dem der Verbrennungsmotor (1) die sekundäre elektrische Maschine (16) als Generator zum Produzieren von elektrischer Energie antreibt, die durch die elektrische Zugmaschine (2) zum Bewegen des Fahrzeugs nutzbar ist.

## Claims

1. Hybrid transmission for a motor vehicle equipped with a heat engine (1) and an electric traction machine (2) offset on the same line, comprising two concentric primary shafts (3, 4) connected respectively to the heat engine and to the electric machine (2) without a disconnect clutch, a secondary shaft (5) connected to the vehicle wheels by a differential (7), and a shaft (6) for transferring motion from a primary shaft (3) to the secondary shaft (5) and for coupling the primary shafts (3, 4), the hybrid transmission comprising only three idle gears (8, 9, 10) associated with the heat engine, the first two (8, 9) of which rotate around the primary shaft (3) connected to the heat engine and the third (10) of which rotates around the transfer shaft (6), and at least one fixed primary gear (14) on the primary shaft (4) connected to the electric traction machine (2), the transmission comprising a secondary electric machine (16) of which the output shaft (18) descends to the transfer shaft (6) so as to be able to combine its torque with that of the heat engine and the power traveling from the heat engine (1) to the secondary electric machine (16) in both directions,via a triple gear set (18a, 17a, 3a) between the primary shaft (3) connected to the heat engine, an intermediate shaft (17) radially offset from the transfer shaft (6) and the shaft (18) of the secondary machine (16), the triple gear set (18a, 171, 3a) comprising a fixed primary gear (3a) fitted on the primary shaft (3) connected to the heat engine (1), the fixed primary gear (3a) meshing with a gear (17a) on the intermediate shaft (17), which is coupled to a gear (18a) on the shaft (18) of the secondary machine (16).

2. Hybrid transmission according to claim 1, **characterized in that** the third idle gear associated with the heat engine (10) meshes with a fixed gear (11) of the primary shaft (4) connected to the traction machine (8).

3. Hybrid transmission according to either of the preceding claims, **characterized in that** the first two idle gears (8, 9) associated with the heat engine each make it possible to establish a heat ratio (*ICE2*)*,* (*ICE4*)*,* which can be hybridized by being combined with an electric ratio (EV1).

4. Hybrid transmission according to claims 2 and 3, **characterized in that** the third idle gear associated with the heat engine (10) makes it possible to establish hybrid modes in two different heat ratios *(ICE1)* and *(ICE3).*

5. Hybrid transmission according to claim 4, **characterized in that** the secondary shaft (5) carries two idle gears (12, 13) meshing with two fixed gears (14, 11) of the primary shaft (4) connected to the traction machine, these two idle gears making it possible to establish, for one of the gears, the electric ratio (*EV1*)*,* and for the other gear the first heat ratio *(ICE1)* or the hybrid mode *(Hyb3).*

6. Hybrid transmission according to claim 5, **characterized in that** in hybrid mode *(Hyb3)* the torque of the heat engine (1) descends from the transfer shaft (6) to the secondary shaft (5) in the second heat ratio *(ICE3)* via a triple gear set consisting of the third idle gear associated with the heat engine (10), a fixed gear (11) of the primary shaft (4) connected to the electric traction machine (2), and an idle gear (13) of the secondary shaft (5).

7. Hybrid transmission according to any of the preceding claims, **characterized in that** it has a series hybrid mode, in which the heat engine (1) drives the secondary electric machine (16) as a generator in order to produce electrical energy that can be used by the electric traction machine (2) to move the vehicle.
